# EUROPEAN PATENT SPECIFICATION

(11) **EP 3 155 894 B1**
(45) Date of publication and mention of the grant of the patent: **24.04.2019**
(21) Application number: 15806451.9
(22) Date of filing: 14.05.2015
(51) Int. Cl.: A01G 7/02, C01B 32/00

(54) **CARBON DIOXIDE APPLICATION DEVICE**
KOHLENDIOXIDAPPLIKATIONSVORRICHTUNG
DISPOSITIF D'APPLICATION DE DIOXYDE DE CARBONE

(30) Priority: 10.06.2014 JP 2014119388
(43) Date of publication of application: 19.04.2017
(73) Proprietor: Futaba Industrial Co., Ltd., Okazaki-shi, Aichi 444-8558 (JP)
(72) Inventor: NIWA, Yuji, Okazaki-shi, Aichi 444-8558 (JP); YUMIDATE, Masaki, Okazaki-shi, Aichi 444-8558 (JP)
(74) Representative: Seemann & Partner Patentanwälte mbB
(86) International application number: PCT/JP2015/063915
(87) International publication number: WO 2015/190213

(56) References cited:
- WO-A1-2014/010561
- JP-A- 2005 341 953
- JP-A- 2010 214 303
- JP-A- 2012 016 322

## Description

### TECHNICAL FIELD

The present invention relates to a carbon dioxide application device that captures carbon dioxide contained in combustion exhaust gas and supplies the carbon dioxide into a greenhouse.

WO 2014/010561 A1 shows a carbon dioxide application device according to prior art.

### BACKGROUND ART

As is widely known, in a greenhouse, a heater is used to heat air inside the greenhouse, so as not to inhibit growth of horticultural plants due to excessive decrease of a temperature in the nighttime. This heater heats the air by combustion heat generated by combustion of a fuel and supplies the air as warm air into the greenhouse.

Also, a carbon dioxide application device has been widely used, which captures carbon dioxide contained in combustion exhaust gas discharged from a heater and uses the carbon dioxide to promote growth of horticultural plants (for example, Patent Document 1 identified below). In the carbon dioxide application device, during nighttime, warm air is supplied into the greenhouse by combustion of a fuel, whereas during daytime, the carbon dioxide that has been captured and stored at the time of the combustion of the fuel during the nighttime is supplied into (applied to) the greenhouse; this promotes photosynthesis in horticultural plants, thereby improving yield and quality of the horticultural plants.

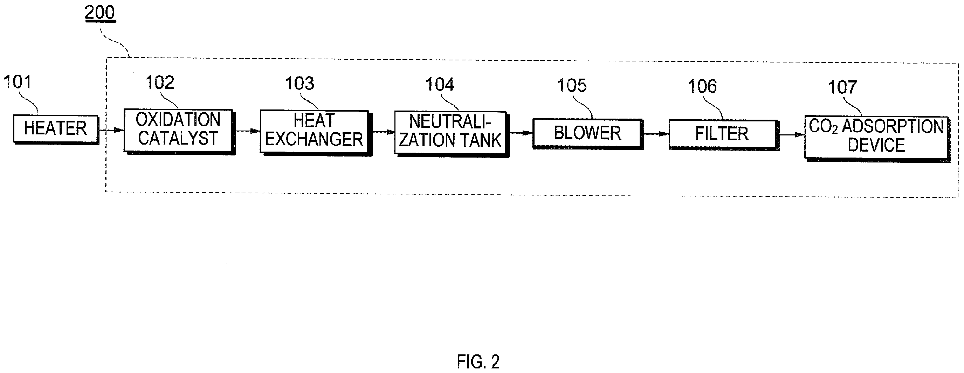

One mode of the above-described carbon dioxide application device is shown in FIG. 2. FIG. 2 is a block diagram showing flow of combustion exhaust gas in a conventional carbon dioxide application device 200. The carbon dioxide application device 200 is used when attached to a heater 101, and comprises an oxidation catalyst 102, a heat exchanger 103, a neutralization tank 104, a blower 105, a filter 106, and a carbon dioxide adsorption device 107. The carbon dioxide application device 200 is used to adsorb and capture carbon dioxide contained in combustion exhaust gas suppled from the heater 101, by means of activated carbon or zeolite, etc. of the carbon dioxide adsorption device 107, so as to apply the carbon dioxide to horticultural plants.

The combustion exhaust gas generated by combustion of the fuel in the heater 101 has a high temperature of around 300°C and contains a large amount of water vapors. Accordingly, if this combustion exhaust gas as it is is supplied to the carbon dioxide adsorption device 107, the activated carbon, etc. of the carbon dioxide adsorption device 107 may be damaged by heat, or condensate water may be generated, which results in inappropriate adsorption of carbon dioxide. For this reason, the carbon dioxide application device 200 is configured such that after being treated by multiple processes, the combustion exhaust gas is supplied to the carbon dioxide adsorption device 107. Hereinafter, these processes for the combustion exhaust gas will be described.

The combustion exhaust gas that has been generated in the heater 101 is first supplied to the oxidation catalyst 102. The oxidation catalyst 102 is a metallic catalyst that performs oxidation of carbon monoxide and nitric oxide contained in the combustion exhaust gas so as to increase safety and alleviate environmental burden.

The combustion exhaust gas that has passed through the oxidation catalyst 102 is then supplied to the heat exchanger 103. The heat exchanger 103 performs heat exchange between the combustion exhaust gas and a refrigerant that flows inside the heat exchanger 103, thereby reducing the temperature of the combustion exhaust gas to around 30°C. Because the temperature reduction causes decrease in the saturated vapor pressure of water, relative humidity of the combustion exhaust gas increases and thus, the combustion exhaust gas becomes gas with high humidity, containing water vapor in the form of white smoke.

The combustion exhaust gas that has passed through the heat exchanger 103 is then supplied to the neutralization tank 104. The neutralization tank 104 is a container, in which water is stored. The combustion exhaust gas supplied to the neutralization tank 104 passes through the water in the form of gas bubbles. As a result of this passing, the water vapor in the form of white smoke is removed from the combustion exhaust gas.

The combustion exhaust gas that has passed through the neutralization tank 104 is sucked by the blower 105 and fed under pressure to the filter 106 located at the further downstream side. In the filter 106, nitrogen oxide, which adversely affects growth of horticultural plants, is removed from the combustion exhaust gas.

The carbon dioxide application device 200 is configured to carry out the above-described processes to the combustion exhaust gas, and thereafter supply the combustion exhaust gas to the carbon dioxide adsorption device 107. With this configuration, it is possible to protect activated carbon, etc., to be used in the carbon dioxide adsorption device 107 from heat or condensate water.

### PRIOR ART DOCUMENTS

### PATENT DOCUMENTS

Patent Document 1: Japanese Unexamined Patent Application Publication No. 2013-074887

### SUMMARY OF THE INVENTION

### PROBLEMS TO BE SOLVED BY THE INVENTION

In recent years, most heaters used to heat air inside a greenhouse use, as a fuel, heavy oil (A-type heavy oil) that is limited for agricultural use. Because the heavy oil contains a greater amount of sulfur components than heating oil, combustion exhaust gas generated by combustion of the heavy oil contains a greater amount of sulfur oxide.

For this reason, in the carbon dioxide application device 200 shown in FIG. 2, when the heavy oil is used as a fuel for the heater 101, sulfur poisoning may occur in the oxidation catalyst 102 located downstream of the heater 101, resulting in inappropriate oxidation of carbon monoxide, etc. In order to further promote use of the carbon dioxide application device from now on, improvement of the above-described heater using heavy oil as a fuel has been strongly desired.

The present invention has been made in view of the above-described problem, an object of which is to provide a carbon dioxide application device that is capable of capturing and suppling carbon dioxide without causing sulfur poisoning, while generating combustion exhaust gas by combustion of heavy oil.

### MEANS FOR SOLVING THE PROBLEMS

In order to solve the above-described problem, a carbon dioxide application device according to the present invention captures carbon dioxide contained in a combustion exhaust gas and supplies the carbon dioxide into a greenhouse, and the carbon dioxide application device comprises a cooler that receives a supply of a combustion exhaust gas generated by combustion of heavy oil in a combustion part and cools the combustion exhaust gas, a dehumidifier that decreases relative humidity of the combustion exhaust gas cooled by the cooler, a sulfur oxide remover that removes sulfur oxide contained in the combustion exhaust gas with the relative humidity decreased by the dehumidifier, an oxidation catalyst that oxidizes carbon monoxide contained in the combustion exhaust gas supplied from the sulfur oxide remover, and an adsorbent that adsorbs carbon dioxide contained in the combustion exhaust gas supplied from the oxidation catalyst. The dehumidifier heats the combustion exhaust gas cooled by the cooler by using heat discharged from a gas generating source or the cooler during operation.

In the carbon dioxide application device of the present invention, due to combustion of heavy oil by the combustion part, the generated combustion exhaust gas contains a large amount of sulfur oxide. However, this sulfur oxide is removed by the sulfur oxide remover before being supplied to the oxidation catalyst and therefore, sulfur poisoning of the oxidation catalyst can be inhibited. Moreover, because the combustion exhaust gas supplied from the combustion part is cooled by the cooler and also because this combustion exhaust gas is supplied to the sulfur oxide remover in a state that the relative humidity is decreased by the dehumidifier, it is possible to inhibit damage of the sulfur oxide remover by heat of the combustion exhaust gas and to inhibit generation of condensate water.

Moreover, this dehumidifier is configured to decrease the relative humidity by heating the combustion exhaust gas, which has been cooled by the cooler, by using heat discharged from the combustion part or the cooler during operation. Thus, without using devices that require separate energy, such as an electric heater heated by electric power, the relative humidity of the combustion exhaust gas can be reduced and therefore, the sulfur oxide remover and the adsorbent can be protected from condensate water.

In this regard, the heat discharged from the combustion part or the cooler during operation may be, for example, heat of the combustion exhaust gas discharged from a heater, etc. for combustion of a fuel, heat of the air heated by the heater, etc. and supplied into the greenhouse, and heat of a refrigerant having a high temperature caused by heat exchange with a high temperature gas in the cooler.

Moreover, in the carbon dioxide application device of the present invention, it is preferable that the dehumidifier heats the combustion exhaust gas cooled by the cooler, by using heat of the combustion exhaust gas supplied to the cooler from the combustion part.

The combustion exhaust gas generated by combustion of the fuel in the combustion part has a very high temperature. In this preferred embodiment, by use of this high-temperature combustion exhaust gas supplied to the cooler from the combustion part, it is possible to heat the combustion exhaust gas cooled by the cooler, so as to ensure decrease of the relative humidity. Thus, the sulfur oxide remover and the adsorbent can be protected from condensate water.

Furthermore, it is preferable that the carbon dioxide application device of the present invention comprises a water storage tank that stores water therein, and that the water storage tank causes the combustion exhaust gas supplied from the cooler to pass, in a form of gas bubbles, through the water in the water storage tank and then to be supplied to the dehumidifier.

In this preferred embodiment, if condensate water is generated in the combustion exhaust gas cooled by the cooler, the condensate water is removed at the time when the combustion exhaust gas passes through the water inside the water storage tank. Therefore, evaporation of condensate water heated by the dehumidifier can be inhibited. Accordingly, it is possible to inhibit moisture evaporated in such a manner from becoming condensate water again in the sulfur oxide remover or the adsorbent.

### EFFECTS OF THE INVENTION

The present invention can provide a carbon dioxide application device that is capable of capturing and suppling carbon dioxide without causing sulfur poisoning, while generating combustion exhaust gas by combustion of heavy oil.

### BRIEF DESCRIPTION OF THE DRAWINGS

FIG. 1 is a block diagram showing a flow of gas in a carbon dioxide application device according to an embodiment of the present invention.
FIG. 2 is a block diagram showing a flow of gas in a conventional carbon dioxide application device.

### MODE FOR CARRYING OUT THE INVENTION

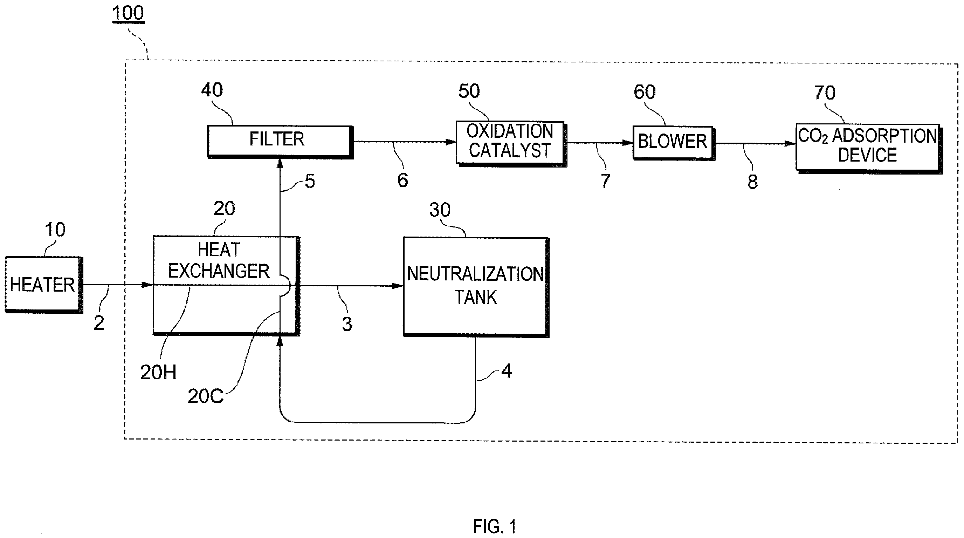

Hereinafter, an embodiment of the present invention will be described with reference to the accompanying drawings. First of all, referring to FIG. 1, an outline of a carbon dioxide application device according to an embodiment of the present invention will be described. FIG. 1 is a block diagram showing a flow of gas in a carbon dioxide application device 100 according to the embodiment of the present invention.

As shown in FIG. 1, the carbon dioxide application device 100 is used when attached to a heater 10, and comprises a heat exchanger 20, a neutralization tank 30, a filter 40, an oxidation catalyst 50, a blower 60, and a carbon dioxide adsorption device 70.

The heater 10 is a combustion device that burns A-type heavy oil as a fuel. The heater 10 heats air inside a greenhouse (not shown) and supplies warm air, so as not to inhibit growth of horticultural plants due to excessive decrease of a temperature of the air inside the greenhouse in the nighttime. A pipe 2 is connected to the heater 10; it is configured such that combustion exhaust gas generated by combustion of A-type heavy oil flows through this pipe 2 and then, is supplied to the carbon dioxide application device 100. The pipe 2 is formed of metallic materials with excellent heat resistance, such as stainless, so that the pipe 2 can withstand a flow of a high-temperature combustion exhaust gas.

The heat exchanger 20 is a heat exchanger that makes two fluids supplied from the outside pass through inside of the heat exchanger 20, thereby causing heat exchange between these two fluids. Specifically, inside the heat exchanger 20, two independent flow paths, namely, a high temperature-side flow path 20H and a low temperature-side flow path 20C, are formed; it is configured such that a fluid having a relatively high temperature flows in the high temperature-side flow path 20H, and a fluid having a relatively low temperature flows in the low temperature-side flow path 20C. The pipe 2 is coupled to the high temperature-side flow path 20H at the upstream side thereof. Also, a pipe 3 is coupled to the high temperature-side flow path 20H at the downstream side thereof.

The neutralization tank 30 is a hollow container in which alkaline aqueous solution is stored. Specifically, inside the neutralization tank 30, a plurality of oyster shells (not shown) are immersed in water; when calcium components contained in the oyster shells are eluted, the water stored becomes an alkaline aqueous solution containing calcium components. The neutralization tank 30 is coupled to the pipe 3 and a pipe 4.

The filter 40 is a filter that removes sulfur oxide and nitrogen oxide contained in the gas passing therethrough; the filter 40 is provided downstream of the heat exchanger 20 and the neutralization tank 30. Specifically, the filter 40 has a very fine pore structure in a surface thereof and is made of granular activated carbon having excellent adsorption characteristics. The filter 40 removes, by adsorption, sulfur oxide and nitrogen oxide contained in the gas.

It is to be noted that in the present embodiment, the filter 40 is configured to remove sulfur oxide and nitrogen oxide by adsorption characteristics of activated carbon; however, a method of the removal is not be limited to the aforementioned. Any method of removing sulfur oxide and nitrogen oxide contained in the gas in a manner other than the adsorption can be adopted.

The oxidation catalyst 50 is provided downstream of the filter 40; the oxidation catalyst 50 is a catalyst that performs oxidation of carbon monoxide contained in the gas. The oxidation catalyst 50 is formed by supporting noble metal particles on a surface of a carrier, such as a ceramic carrier.

The blower 60 is provided downstream of the oxidation catalyst 50; the blower 60 is a fan motor that drives a motor (not shown) upon receipt of supply of electric power to turn a fan (not shown), thereby drawing the gas from the oxidation catalyst 50 via a pipe 7. The gas drawn from the blower 60 is sent by pressure to the downstream side via a pipe 8.

The carbon dioxide adsorption device 70 is provided downstream of the blower 60, and stores activated carbon (adsorbent), which is not shown, thereinside. The activated carbon adsorbs and captures carbon dioxide contained in the gas, with many pores formed on a surface of the activated carbon, thereby storing the carbon dioxide thereinside. The gas, from which the carbon dioxide has been partly or entirely removed by the activated carbon in the carbon dioxide adsorption device 70, is discharged to the outside.

Here, in the present embodiment, the activated carbon is used as an adsorbent. However, any other materials that have a function of adsorbing and storing carbon dioxide contained in the gas can be used; for example, hydrophilic porous materials, such as zeolite, may be used.

In the carbon dioxide application device 100 having the above-described configurations, in the nighttime in which a temperature of the air inside the greenhouse decreases, carbon dioxide contained in the combustion exhaust gas generated by combustion of the heavy oil is adsorbed by the activated carbon of the carbon dioxide adsorption device 70.

Hereinafter, a flow of the combustion exhaust gas in the carbon dioxide application device 100 will be described. Values of temperature and humidity of the combustion exhaust gas flowing through each element of the carbon dioxide application device 100 are indicated in parentheses after respective names of such gas. These values are, however, merely indicated as rough values to help understand the invention, and the present invention should not be limited to these values.

As a result of combustion of A-type heavy oil in the heater 10, a high-temperature combustion exhaust gas (around 300°C) is discharged from the heater 10. Because A-type heavy oil is used as a fuel, this combustion exhaust gas (around 300°C) contains a large amount of sulfur oxide. The discharged combustion exhaust gas is supplied to the heat exchanger 20 in the carbon dioxide application device 100 via the pipe 2.

The heat exchanger 20, which has received the supply of the combustion exhaust gas (around 300°C) from the heater 10, makes the combustion exhaust gas (around 300°C) flow in the high-temperature side flow path 20H and makes a later-explained low-temperature gas (around 20°C) flow in the low temperature-side flow path 20C. Because of this, heat exchange is carried out between the combustion exhaust gas (around 300°C) and the low-temperature gas (around 20°C). Because heat of the combustion exhaust gas (around 300°C) is removed by the low-temperature gas (around 20°C), the combustion exhaust gas (around 300°C) is cooled down. Consequently, the temperature of the combustion exhaust gas (around 300°C) supplied from the heater 10 via the pipe 2 is decreased to around 30°C as a result of passing through the heat exchanger 2.

The combustion exhaust gas (around 30°C) that has passed through the high temperature-side flow path 20H of the heat exchanger 20 is supplied to the neutralization tank 30 via the pipe 3. The combustion exhaust gas (around 30°C) is supplied into water stored in the neutralization tank 30 and then, forms gas bubbles. The combustion exhaust gas in the form of gas bubbles rises through the water by buoyancy and emerges from the surface of the water. By making the combustion exhaust gas in the form of gas bubbles pass through the water in this manner, carbon dioxide gas contained in the combustion exhaust gas combines with calcium in the water, which results in precipitation of calcium carbonate. This calcium carbonate can be used as a fertilizer to be supplied to horticultural plants.

As the combustion exhaust gas (around 30°C) supplied to the neutralization tank 30 passes through the neutralization tank 30, the temperature of this combustion exhaust gas decreases to around 20°C. Because the temperature of the combustion exhaust gas (around 20°C) that has passed through the neutralization tank 30 has been significantly decreased from the temperature at the time of generation (around 300°C), a saturated vapor pressure of water of this combustion exhaust gas (around 20°C) also decreases, and the combustion exhaust gas (around 20°C) becomes a high-humidity gas having a relative humidity of around 99%. This combustion exhaust gas (20°C, around 99%) flows through the pipe 4 toward the heat exchanger 20.

The combustion exhaust gas (20°C, around 99%) supplied to the heat exchanger 20 after flowing through the pipe 4 flows in the low temperature-side flow path 20C of the heat exchanger 20. That is to say, the combustion exhaust gas (around 30°C) that has once passed through the heat exchanger 20 returns to the heat exchanger 20 via the neutralization tank 30 so as to serve as the aforementioned low-temperature gas (around 20°C).

Accordingly, in the heat exchanger 20, heat is exchanged between the combustion exhaust gas (around 300°C), which has been supplied from the heater 10 and flows in the high temperature-side flow path 20H, and the combustion exhaust gas (20°C, around 99%), which has returned in the above-described manner and flows in the low temperature-side flow path 20C. The combustion exhaust gas (20°C, around 99%) flowing in the low temperature-side flow path 20C is heated by removing the heat of the combustion exhaust gas (around 300°C) flowing in the high temperature-side flow path 20H. For this reason, as the combustion exhaust gas (20°C, around 99%) that has returned to the heat exchanger 20 passes through the heat exchanger 20, the temperature of this combustion exhaust gas increases to around 40°C; in addition, because the saturated vapor pressure of water increases with the aforementioned increase of the temperature, the relative humidity decreases to around 30%.

The combustion exhaust gas (40°C, around 30%) discharged from the low temperature-side flow path 20C of the heat exchanger 20 is supplied to the filter 40 via a pipe 5. This supply of the combustion exhaust gas (40°C, around 30%) to the filter 40 is achieved such that the blower 60 disposed downstream of the filter 40 is operated to draw the combustion exhaust gas (40°C, around 30%) by generating negative pressure in a pipe 6-side. The combustion exhaust gas (40°C, around 30%) passes through the filter 40, thereby removing sulfur oxide and nitrogen oxide from the combustion exhaust gas (40°C, around 30%) to the extent that such gas can be supplied to horticultural plants without any problems.

The combustion exhaust gas that has passed through the filter 40 is supplied to the oxidation catalyst 50 via the pipe 6. In this oxidation catalyst 50, carbon monoxide contained in the combustion exhaust gas is oxidized and therefore, such a combustion exhaust gas becomes a gas containing a large amount of carbon dioxide.

The combustion exhaust gas that has passed through the oxidation catalyst 50 is drawn by the blower 60 via the pipe 7. Because the combustion exhaust gas flowing in the pipe 7 has been removed of its heat from the filter 40 and the oxidation catalyst 50 while passing through the filter 40 and the oxidation catalyst 50; accordingly, the temperature of this gas is slightly decreased, and the relative humidity is increased. However, while passing through the blower 60, the combustion exhaust gas takes away the Joule heat generated by an electric motor of the blower 60; consequently, the temperature increases to around 40°C again, and the relative humidity decreases to around 30%.

The combustion exhaust gas (40°C, around 30%) that has passed through the blower 60 is supplied to the carbon dioxide adsorption device 70 via the pipe 8. Because the combustion exhaust gas (40°C, around 30%) passes through the activated carbon stored in the carbon dioxide adsorption device 70, carbon dioxide contained in this gas is adsorbed and stored by the activated carbon. For the purpose of accelerating photosynthesis of horticultural plants in the greenhouse, the carbon dioxide stored in the carbon dioxide adsorption device 70 is supplied to the horticultural plants in the daytime.

In this regard, if heat resistance performance of the activated carbon stored in the carbon dioxide adsorption device 70 is low, another heat exchanger (not shown) can be provided between the blower 60 and the carbon dioxide adsorption device 70, so as to decrease the temperature of the combustion exhaust gas to be supplied to the carbon dioxide adsorption device 70.

In the carbon dioxide application device 100 configured as described above, although the combustion exhaust gas supplied from the heater 10 contains a large amount of sulfur oxide, this sulfur oxide is removed by the filter 40 before being supplied to the oxidation catalyst 50. Thus, it is possible to inhibit sulfur poisoning in the oxidation catalyst 50. Moreover, the combustion exhaust gas supplied from the heater 10 is cooled down by the high temperature-side flow path 20H of the heat exchanger 20 and is supplied to the filter 40 after the relative humidity is decreased by the low temperature-side flow path 20C of the heat exchanger 20. Consequently, it is possible to inhibit damages of the filter 40 caused by heat of the combustion exhaust gas and inhibit generation of condensate water.

Furthermore, in this low temperature-side flow path 20C of the heat exchanger 20, heat of the combustion exhaust gas discharged from the heater 10 is used to heat the combustion exhaust gas that has been cooled down by the high temperature-side flow path 20H, thereby lowering the relative humidity. Accordingly, without using apparatus that requires separate energy, such as an electric heater heated by electric power, etc., it is possible to lower the relative humidity of the combustion exhaust gas and to protect the filter 40 and the carbon dioxide adsorption device 70 from condensate water.

Other than the aforementioned, as a heat source for heating the combustion exhaust gas that has been cooled down by the high temperature-side flow path 20H, for example, heat of air that is heated by the heater 10 and then supplied to the greenhouse can be used.

Moreover, the combustion exhaust gas is supplied to the low temperature-side flow path 20C of the heat exchanger 20 after having been passed through the water inside the neutralization tank 30. Because of this, if condensate water is generated in the combustion exhaust gas that has been cooled by the high temperature-side flow path 20H of the heat exchanger 20, the condensate water is removed at the time when the combustion exhaust gas passes through the water inside the neutralization tank. Thus, it is possible to inhibit evaporation of the condensate water caused by heating by the low temperature-side flow path 20C of the heat exchanger 20. Accordingly, it is possible to inhibit the moisture evaporated in the above-described manner from becoming condensate water again in the filter 40 or the carbon dioxide adsorption device 70.

The embodiment of the present invention has been described as above with reference to the specific examples. However, the present invention should not be limited to these specific examples. That is, embodiments that are made by appropriately designing or modifying the specific examples by those skilled in the art can be included in the scope of the present invention within the limitation as defined by the appended claims.

For example, in the above-described embodiment, the blower 60 is disposed downstream of the oxidation catalyst 50. However, the main idea of the present invention should not be limited to this configuration, and the blower 60 can be disposed upstream of the oxidation catalyst 50.

### EXPLANATION OF REFERENCE NUMERALS

- 10:: heater (combustion part)
- 20:: heat exchanger
- 20H:: high temperature-side flow path (cooler)
- 20C:: low temperature-side flow path (dehumidifier)
- 40:: filter (sulfur oxide remover)
- 50:: oxidation catalyst
- 60:: blower
- 70:: carbon dioxide adsorption device (adsorbent)
- 100:: carbon dioxide application device

## Claims

1. A CARBON DIOXIDE application device (100, 200) that captures carbon dioxide contained in a combustion exhaust gas and supplies the carbon dioxide into a greenhouse, the carbon dioxide application device (100, 200) comprising: a cooler that receives a supply of a combustion exhaust gas generated by combustion of heavy oil in a combustion part and cools the combustion exhaust gas; a dehumidifier that decreases relative humidity of the combustion exhaust gas cooled by the cooler; **characterized by** a sulfur oxide remover that removes sulfur oxide contained in the combustion exhaust gas with the relative humidity decreased by the dehumidifier; an oxidation catalyst (102, 50, 70) that oxidizes carbon monoxide contained in the combustion exhaust gas supplied from the sulfur oxide remover; and an adsorbent that adsorbs carbon dioxide contained in the combustion exhaust gas supplied from the oxidation catalyst (102, 50, 70), wherein the dehumidifier heats the combustion exhaust gas cooled by the cooler by using heat discharged from the combustion part or the cooler during operation.

2. The carbon dioxide application device (100, 200) according to claim 1, wherein the dehumidifier heats the combustion exhaust gas cooled by the cooler, by using heat of the combustion exhaust gas supplied to the cooler from the combustion part.

3. The carbon dioxide application device (100, 200) according to claim 1 or 2 comprising a water storage tank that stores water therein, wherein the water storage tank causes the combustion exhaust gas supplied from the cooler to pass, in a form of gas bubbles, through the water in the water storage tank and then to be supplied to the dehumidifier.

## Patentansprüche

1. Kohlendioxidapplikationsvorrichtung (100, 200), die Kohlendioxid, das in einem Verbrennungsabgas enthalten ist, auffängt und das Kohlendioxid einem Treibhaus zuführt, wobei die Kohlendioxidapplikationsvorrichtung (100, 200) Folgendes umfasst: einen Kühler, der eine Zufuhr eines Verbrennungsabgases erhält, das durch die Verbrennung eines Schweröls in einem Verbrennungsteil erzeugt wird, und das Verbrennungsabgas kühlt; einen Entfeuchter, der die relative Feuchtigkeit des Verbrennungsabgases verringert, das von dem Kühler gekühlt wird; **gekennzeichnet durch** einen Schwefeloxid-Entferner, der Schwefeloxid entfernt, das in dem Verbrennungsabgas enthalten ist, dessen relative Feuchtigkeit von dem Entfeuchter verringert wird; einen Oxidationskatalysator (102, 50, 70), der Kohlenmonoxid oxidiert, das in dem Verbrennungsabgas enthalten ist, das von dem Schwefeloxid-Entferner zugeführt wird; und ein Adsorptionsmittel, das Kohlenmonoxid adsorbiert, das in dem Verbrennungsabgas enthalten ist, das von dem Oxidationskatalysator (102, 50, 70) zugeführt wird, wobei der Entfeuchter das Verbrennungsabgas, das von dem Kühler gekühlt wurde, erwärmt, indem Wärme verwendet wird, die während des Betriebs von dem Verbrennungsteil oder dem Kühler abgegeben wird.

2. Kohlendioxidapplikationsvorrichtung (100, 200) nach Anspruch 1, wobei der Entfeuchter das Verbrennungsabgas, das von dem Kühler gekühlt wurde, erwärmt, indem Wärme des Verbrennungsabgases verwendet wird, das dem Kühler von dem Verbrennungsteil zugeführt wird.

3. Kohlendioxidapplikationsvorrichtung (100, 200) nach Anspruch 1 oder 2, umfassend einen Wasserspeichertank, in dem Wasser gespeichert wird, wobei der Wasserspeichertank bewirkt, dass das Verbrennungsabgas, das von dem Kühler zugeführt wird, das Wasser in dem Wasserspeichertank in Form von Gasbläschen durchläuft und dann dem Entfeuchter zugeführt wird.

## Revendications

1. Un dispositif d'application de dioxyde de carbone (100, 200) qui capture le dioxyde de carbone contenu dans un gaz d'échappement de combustion et alimente le dioxyde de carbone dans une serre, le dispositif d'application de dioxyde de carbone (100, 200) comprenant: un refroidisseur qui reçoit l'alimentation d'un gaz d'échappement de combustion généré par la combustion d'huile lourde dans une partie de combustion et qui refroidit le gaz d'échappement de combustion; un déshumidificateur qui diminue l'humidité relative des gaz d'échappement de combustion refroidis par le refroidisseur; **caractérisé par** un dispositif d'élimination d'oxyde de soufre qui élimine l'oxyde de soufre contenu dans les gaz d'échappement de combustion avec l'humidité relative diminuée par le déshumidificateur; un catalyseur d'oxydation (102, 50, 70) qui oxyde le monoxyde de carbone contenu dans les gaz d'échappement de combustion fournis par le dispositif d'élimination de l'oxyde de soufre; et un adsorbant qui adsorbe le dioxyde de carbone contenu dans le gaz d'échappement de combustion fourni par le catalyseur d'oxydation (102, 50, 70), le déshumidificateur chauffant le gaz d'échappement de combustion refroidi par le refroidisseur en utilisant la chaleur évacuée par la partie de combustion ou le refroidisseur durant le fonctionnement.

2. Le dispositif d'application de dioxyde de carbone (100, 200) selon la revendication 1, dans lequel le déshumidificateur chauffe les gaz d'échappement de combustion refroidis par le refroidisseur, en utilisant la chaleur des gaz d'échappement de combustion fournis au refroidisseur par la partie de combustion.

3. Le dispositif d'application de dioxyde de carbone (100, 200) selon la revendication 1 ou 2, comprenant un réservoir de stockage d'eau qui stocke de l'eau dans en lui, le réservoir de stockage amenant les gaz d'échappement de combustion fournis par le refroidisseur à passer, sous la forme de bulles de gaz, à travers l'eau présente dans le réservoir de stockage d'eau et à être ensuite amenés vers le déshumidificateur.
